# EUROPÄISCHE PATENTANMELDUNG

(11) **EP 1 353 106 A2**
(43) Veröffentlichungstag der Anmeldung: **15.10.2003**
(21) Anmeldenummer: 03008140.0
(22) Anmeldetag: 08.04.2003
(51) Int. Cl.: F16L 27/08

(54) **Einrichtung für die Überleitung einer Flüssigkeit aus einem stillstehenden in einen rotierenden Vorrichtungsteil**

(30) Priorität: 11.04.2002 DE 10216068
(71) Anmelder: Mader, Hartmut, 59227 Ahlen (DE); Mittelfarwick, Felix, 59227 Ahlen (DE)
(72) Erfinder: Mader, Hartmut, 59227 Ahlen (DE); Mittelfarwick, Felix, 59227 Ahlen (DE)
(74) Vertreter: Schulze Horn, Kathrin

(57) **Zusammenfassung**

Die Erfindung betrifft eine Einrichtung (1) für die Überleitung einer in wenigstens einem Flüssigkeitskanal (10) geführten Flüssigkeit aus einem stillstehenden Vörrichtungsteil (12) in einen rotierenden Vorrichtungsteil (13) oder umgekehrt, wobei die Vorrichtungsteile (12, 13) mindestens zwei konzentrisch zu einer Drehachse (14) des rotierenden Vorrichtungsteils (13) angeordnete und ineinandergreifende Elemente umfassen, die einen Abschnitt des Flüssigkeitskanals (10) bilden und miteinander eine Spaltdichtung bilden.

Die neue Einrichtung ist dadurch gekennzeichnet, daß das eine Element eine fest an dem einen Vorrichtungsteil (13) angeordnete Lagerhülse (2) ist und daß das andere Element eine Dichthülse (3) ist, die in ihrer Axialrichtung parallel zur Drehachse (14) verschieblich und dichtend in oder an dem anderen Vorrichtungsteil (12) gehaltert und geführt ist, wobei die Dichthülse (3) in einer ersten Verschiebungsendstellung konzentrisch in der Lagerhülse (2) oder um diese herum liegt und mit dieser die Spaltdichtung bildet und wobei die Dichthülse (3) in einer zweiten Verschiebungsendstellung von der Lagerhülse (2) entfernt und getrennt ist.

## Beschreibung

Die vorliegende Erfindung betrifft eine Einrichtung für die Überleitung einer in wenigstens einem Flüssigkeitskanal geführten Flüssigkeit aus einem stillstehenden Vorrichtungsteil in einen rotierenden Vorrichtungsteil oder umgekehrt, wobei die Vorrichtungsteile mindestens zwei konzentrisch zu einer Drehachse des rotierenden Vorrichtungsteils angeordnete und ineinandergreifende Elemente umfassen, die einen Abschnitt des Flüssigkeitskanals bilden und miteinander eine Spaltdichtung bilden.

Einrichtungen der eingangs genannten Art sind aus der Praxis des Maschinenbaus bekannt, beispielsweise für Anwendungen im Zusammenhang mit der Schmierung und Kühlung von Werkzeug an Werkzeugmaschinen oder im Zusammenhang mit hydraulischen Anlagen und Antrieben. Bei Werkzeugmaschinen werden dabei unter anderem Einrichtungen eingesetzt, bei denen die miteinander zusammenwirkenden und gegeneinander rotierenden Teile eine Spaltdichtung bilden, wobei eine gewisse, geringe Leckage in Kauf genommen werden kann, da hier die Leckageflüssigkeit wieder in den Kreislauf der Flüssigkeit gelangt, ohne daß dafür besondere Maßnahmen ergriffen werden müssen. Die gegeneinander rotierenden Elemente, die miteinander die Spaltdichtung bilden, müssen zur Vermeidung eines Verschleißes ständig mit der Flüssigkeit beaufschlagt sein, da andernfalls ein Trockenlauf eintritt, der zu einer zu hohen Reibung und damit zu einer nicht mehr hinnehmbaren Vergrößerung der Spaltweite der Spaltdichtung führt. Damit wir die Funktion der Dichtung nicht mehr gewährleistet. Nachteilig ist dabei, daß auch in solchen Einsatzfällen, in denen für nachgeschaltete Vorrichtungsteile, z.B. Werkzeuge, zeitweise keine Flüssigkeit benötigt wird, dennoch Flüssigkeit durch die Einrichtung geleitet werden muß, um deren Beschädigung oder gar Zerstörung im Bereich der Spaltdichtung zu vermeiden.

Für die vorliegende Erfindung stellt sich die Aufgabe, eine Einrichtung der eingangs genannten Art zu schaffen, bei der auch bei einem Trockenlauf, also bei fehlender Strömung der Flüssigkeit, eine dauerhafte Funktionstüchtigkeit der Spaltdichtung und der diese bildenden Elemente der Einrichtung gewährleistet ist.

Die Lösung dieser Aufgabe gelingt erfindungsgemäß mit einer Einrichtung der eingangs genannten Art, die dadurch gekennzeichnet ist, daß.das eine Element eine fest an dem einen Vorrichtungsteil angeordnete Lagerhülse ist und daß das andere Element eine Dichthülse ist, die in ihrer Axialrichtung parallel zur Drehachse verschieblich und dichtend in oder an dem anderen Vorrichtungsteil gehaltert und geführt ist, wobei die Dichthülse in einer ersten Verschiebungsendstellung konzentrisch in der Lagerhülse oder um diese herum liegt und mit dieser die Spaltdichtung bildet und wobei die Dichthülse in einer zweiten Verschiebungsendstellung von der Lagerhülse entfernt und getrennt ist.

Die erfindungsgemäße Einrichtung bietet den wesentlichen Vorteil, daß die miteinander die Spaltdichtung bildenden Elemente wahlweise in und außer Eingriff bringbar sind. Der Eingriff der Elemente wird zweckmäßig also nur dann hergestellt, wenn tatsächlich eine Flüssigkeit durch die Einrichtung hindurchgeleitet wird; entsprechend wird zweckmäßig der Eingriff der Elemente aufgehoben, wenn keine Flüssigkeit durch die Einrichtung geleitet wird. Wenn die Elemente der Einrichtung, die miteinander die Spaltdichtung bilden, in Eingriff stehen und wenn gleichzeitig Flüssigkeit durch die Einrichtung geleitet wird, ist für die erforderliche Schmierung im Bereich der Spaltdichtung gesorgt, so daß ein Verschleiß und damit eine Beschädigung der die Dichtung bildenden Teile vermieden wird. Auf der anderen Seite wird jeder Verschleiß zwischen den miteinander die Spaltdichtung bildenden Elementen vermieden, wenn sie außer Eingriff gebracht sind, solange keine Flüssigkeit durch die Einrichtung geleitet wird, aber dennoch eine Rotation der Vorrichtungsteile gegeneinander auftritt. Da dann die Elemente, die die Spaltdichtung bilden, in dieser Konstellation außer Eingriff sind, können sie auch nicht verschleißen, so daß die miteinander die Spaltdichtung bildenden Oberflächen der Elemente keinen Schaden nehmen, auch wenn keine Flüssigkeit durch die Einrichtung hindurchgeleitet wird und wenn gleichzeitig dennoch eine Rotation der Vorrichtungsteile gegeneinander vorliegt.

Um eine mit einem gewissen Fehlerrisiko behaftete manuelle Verschiebung der Dichthülse zu vermeiden und um ohne aufwendige fernbetätigte Betätigungsmittel auszukommen, ist in weiterer Ausgestaltung bevorzugt vorgesehen, daß die Dichthülse durch den Druck und/oder die Strömung der Flüssigkeit in ihre erste Verschiebungsendstellung bringbar und in dieser haltbar ist. Auf diese Weise wird erreicht, daß sich die Dichthülse zwangsweise in ihre erste Verschiebungsendstellung bewegt, sobald und solange ein Flüssigkeitsdruck oder eine Flüssigkeitsströmung vorliegt.

Weiterhin ist bevorzugt vorgesehen, daß die Dichthülse mit einer dem Druck und/oder der Strömung der Flüssigkeit entgegengerichteten Vorbelastungskraft beaufschlagt ist, durch welche die Dichthülse vollkommen lageunabhängig bei fehlendem Druck und/oder fehlender Strömung der Flüssigkeit in ihre zweite Verschiebungsendstellung bringbar und in dieser haltbar ist. Mit dieser Ausgestaltung wird erreicht, daß die Dichthülse unabhängig von ihrer räumlichen Orientierung bei fehlendem Flüssigkeitsdruck oder fehlender Flüssigkeitsströmung selbsttätig und ohne Eingriff von außen in ihre zweite Verschiebungsendstellung gelangt und in dieser verbleibt, bis wieder ein Flüssigkeitsdruck oder eine Flüssigkeitsströmung auftritt. Dadurch wird eine vollkommen selbsttätige, also automatische Verstellung der Dichthülse nach den jeweiligen Erfordernissen erreicht, ohne daß dafür manuelle Eingriffe oder aufwendige Betätigungseinrichtungen nötig werden.

Um den Flüssigkeitsdruck für die Verstellung der Dichthülse nutzen zu können, ist vorgesehen, daß die Dichthülse auf ihrer der zuströmenden Flüssigkeit zugewandten Stirnseite eine größere Stirnfläche aufweist als auf ihrer der abströmenden Flüssigkeit zugewandten Stirnseite. Aufgrund dieser unterschiedlich großen Stirnflächen ergeben sich bei auf beide Stirnflächen einwirkendem gleichen Flüssigkeitsdruck unterschiedliche Kräfte, wobei die auf die größere Stirnfläche ausgeübte Kraft die entgegengesetzt gerichtete Kraft auf die andere Stirnfläche überwiegt; dieser Kraftüberschuß sorgt für die gewünschte Verschiebung der Dichthülse. Der Flächenunterschied wird dabei zweckmäßig so gewählt, daß bei vorgegebenen Druckverhältnissen die überwiegende Kraft so groß ist, daß sie die oben erwähnte Vorbelastungskraft sowie gegebenenfalls vorhandene Reibungskräfte sicher überwindet.

Zusätzlich schlägt die Erfindung vor, daß die Dichthülse in ihrer zweiten Verschiebungsendstellung den Flüssigkeitskanal absperrt. Hiermit erhält die Dichthülse zusätzlich die Funktion eines Rückschlagventils, so daß ein unerwünschter Austritt oder ein unerwünschtes Nachfließen von Flüssigkeit vermieden wird.

In konkreter Weiterbildung ist vorgesehen, daß an dem die Dichthülse aufweisenden Vorrichtungsteil ein Steuerzapfen konzentrisch zur Dichthülse angeordnet ist, der in der zweiten Verschiebungsendstellung der Dichthülse dichtend mit dieser in Eingriff steht, wobei die axiale Länge des Steuerzapfens maximal etwa 50% des axialen Verschiebungsweges der Dichthülse beträgt. Dieser Steuerzapfen bildet zusammen mit der Dichthülse den Verschluß für den Flüssigkeitskanal, solange die Dichthülse mit dem Steuerzapfen in Eingriff steht. Gleichzeitig wird hiermit erreicht, daß zu Beginn der Verschiebungsbewegung der Dichthülse vom Steuerzapfen weg der gesamte Flüssigkeitsdruck auf die Dichthülse wirkt und daß erst nach einem gewissen Verschiebungsweg der Dichthülse der Strömungsweg, also der Flüssigkeitskanal, für die Flüssigkeit freigegeben wird. Auf diese Weise werden eine besonders hohe Zuverlässigkeit und eine hohe Schnelligkeit der Verschiebung der Dichthülse aus ihrer zweiten Verschiebungsendstellung in ihre erste Verschiebungsendstellung gewährleistet.

Um Fluchtungsfehler im Bereich der Spaltdichtung und der diese bildenden Bauteile zu vermeiden und gegebenenfalls auszugleichen, schlägt die Erfindung vor, daß die Dichthülse in oder auf einer Führungshülse geführt ist und daß die Führungshülse mit radialem Bewegungsspiel dichtend in dem zugehörigen Vorrichtungsteil gelagert ist.

Eine ergänzende Maßnahme zur Ermöglichung eines Ausgleichs von Fluchtungsfehlern besteht gemäß Erfindung darin, daß die Dichthülse und die Führungshülse mit in der ersten Verschiebungsendstellung der Dichthülse aneinander anliegenden, ein Pendellager bildenden kalottenförmigen Anschlagflächen ausgebildet sind. Diese Anschlagflächen gewährleisten auch dann noch ein dichtes Anliegen aneinander, wenn die beiden Teile, die diese Anschlagflächen aufweisen, unter einem aus einer exakten Flucht abweichenden Winkel zueinander verlaufen.

Zwecks Erzielung einer möglichst einfachen Bauweise bei sehr zuverlässiger Funktion ist weiter vorgesehen, daß zur Erzeugung der Vorbelastungskraft eine Druckfeder zwischen der Dichthülse einerseits und dem zugehörigen Vorrichtungsteil oder der Führungshülse andererseits angeordnet ist.

Wie oben erläutert, bilden die Lagerhülse und die Dichthülse eine Spaltdichtung miteinander, solange sie in Eingriff miteinander stehen. Diese Spaltdichtung ist hinsichtlich ihrer Spaltweite und ihrer Spaltlänge zweckmäßig so ausgelegt, daß auf der einen Seite die gewünschte Dichtigkeit im Hinblick auf die durchgeleitete Flüssigkeit gewährleistet ist und daß zum anderen gerade so viel Flüssigkeit durch den Dichtspalt hindurchtritt, wie für dessen Schmierung zur Vermeidung eines Verschleißes erforderlich ist. Eine kleine, im Hinblick auf die gesamte durchgeleitete Flüssigkeitsmenge vernachlässigbare Leckageflüssigkeitsmenge tritt dabei durch die Spaltdichtung nach außen aus. Um diese Leckageflüssigkeit schadlos abzuleiten, ist erfindungsgemäß ein von der Spaltdichtung ausgehend zwischen den beiden Vorrichtungsteilen drucklos nach außen führender Drainagespalt oder -kanal für die Ableitung dieser Leckageflüssigkeit vorgesehen.

Eine vorteilhafte Ausgestaltung und Anwendung der Einrichtung ist dadurch gekennzeichnet, daß der rotierende Vorrichtungsteil eine Werkzeugspindel einer Werkzeugmaschine ist, daß der stillstehende Vorrichtungsteil ein Teil des Gehäuses der Werkzeugmaschine ist und daß die Flüssigkeit eine Kühl- und Schmierflüssigkeit für ein an. der Werkzeugspindel austauschbar gehaltertes Werkzeug ist. Dieses Werkzeug kann dabei ganz beliebig ein Werkzeug mit innerer Kühlung und Schmierung oder ein Werkzeug ohne eine solche innere Kühlung und Schmierung sein, da unabhängig von dieser Ausgestaltung des Werkzeuges die Einrichtung in der Lage ist, wahlweise Flüssigkeit für die innere Kühlung und Schmierung eines entsprechend ausgestalteten Werkzeuges unter Abdichtung nach außen zuzuführen oder bei einem Werkzeug ohne eine solche innere Kühlung und Schmierung, also bei fehlendem Flüssigkeitsdurchfluß, die auftretende Rotation schadlos zu verkraften.

In weiterer Ausgestaltung ist bevorzugt vorgesehen, daß die Einrichtung am werkzeugfernen Ende der Werkzeugspindel angeordnet ist. Auf diese Weise wird insbesondere erreicht, daß die Einrichtung die Anbringung des Werkzeuges an der Werkzeugspindel sowie die Bewegungen des Werkzeuges relativ zu den feststehenden Teilen der Werkzeugmaschine und relativ zu einem zu bearbeitenden Werkstück in keiner Weise behindert. An dem werkzeugfernen Ende der Werkzeugspindel ist in der Regel problemlos die Unterbringung der Einrichtung möglich.

Für solche Fälle, in denen die Einrichtung nicht am werkzeugfernen Ende der Spindel angeordnet werden kann, ist alternativ vorgesehen, daß die Einrichtung im Verlauf der Werkzeugspindel zwischen zwei diese lagernden Lagereinheiten angeordnet ist. Auch mit dieser Anordnung wird erreicht, daß die Einrichtung die Anbringung des Werkzeuges an der Werkzeugspindel sowie die Bewegungen des Werkzeuges relativ zu den feststehenden Teilen der Werkzeugmaschine und relativ zu einem zu bearbeitenden Werkstück nicht behindert.

Ein Ausführungsbeispiel der Erfindung wird im folgenden anhand einer Zeichnung erläutert. Die Figuren der Zeichnung zeigen:
- Figur 1: eine Einrichtung in einem Längsschnitt mit einer ersten Verschiebungsstellung einer Dichthülse und
- Figur 2: die Einrichtung aus Figur 1 in gleicher Darstellung, nun mit einer zweiten Verschiebungsstellung der Dichthülse.

Die Zeichnungsfiguren zeigen ein Ausführungsbeispiel einer Einrichtung 1 für die Überleitung einer in wenigstens einem Flüssigkeitskanal 10 geführten Flüssigkeit aus einem stillstehenden Vorrichtungsteil 12 in einen rotierenden Vorrichtungsteil 13. Die Vorrichtungsteile 12, 13 sind beispielsweise Teile einer Werkzeugmaschine, wobei dann der Vorrichtungsteil 12 ein Teil des stillstehenden Gehäuses der Werkzeugmaschine und der Vorrichtungsteil 13 die Werkzeugspindel der Werkzeugmaschine ist, wobei von der Spindel hier nur der werkzeugferne Endbereich sichtbar ist. Der rotierende Vorrichtungsteil 13 ist um die Drehachse 14 drehbar, wobei die Mittel zur Lagerung des rotierenden Vorrichtungsteils 13 und zu dessen Antrieb hier nicht dargestellt sind.

Der Flüssigkeitskanal für die aus dem stillstehenden Vorrichtungsteil 12 in den rotierenden Vorrichtungsteil 13 überzuleitende Flüssigkeit verläuft gemäß Zeichnung von oben kommend zunächst etwa in Radialrichtung relativ zur Drehachse 14 durch den stillstehenden Teil 12 der Vorrichtung nach innen bis annähernd zur Drehachse 14. Dort mündet der Flüssigkeitskanal 10 in einen hohlen Bereich im Inneren des stillstehenden Vorrichtungsteils 12 und führt von dort aus in Axialrichtung des rotierenden Vorrichtungsteils 13 durch diesen hindurch nach links.

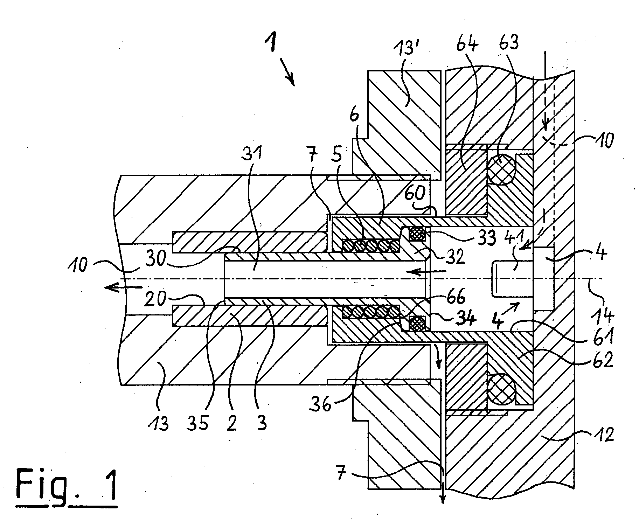

Die Abdichtung zwischen dem stillstehenden Vorrichtungsteil 12 und dem rotierenden Vorrichtungsteil 13 im Bereich des Flüssigkeitskanals 10'wird hier durch eine Lagerhülse 2 einerseits und eine Dichthülse 3 andererseits bewirkt. Die Lagerhülse 2 ist fest im rotierenden Vorrichtungstei'l 13 konzentrisch zu dessen Drehachse 14 angeordnet, beispielsweise eingepreßt oder eingeklebt. In dem in Figur 1 gezeigten Funktionszustand der Einrichtung 1 liegt die Dichthülse 3 über einen Teil ihrer Länge und über einen größeren Teil der axialen Länge der Lagerhülse 2 in dieser. Dabei bilden der Innenumfang 20 der Lagerhülse 2 und der Außenumfang 30 der Dichthülse 3 miteinander eine Spaltdichtung. Die Spaltdichtung besitzt ein Spaltmaß und eine Spaltlänge, die so bemessen und abgestimmt sind, daß einerseits die gewünschte Dichtigkeit im Hinblick auf die unter Druck durch den Flüssigkeitskanal 10 strömende Flüssigkeit gewährleistet ist und daß andererseits eine für die Schmierung der gegeneinander rotierenden Oberflächen 20, 30 von Lagerhülse 2 und Dichthülse 3 ausreichende, in der Praxis verhältnismäßig kleine Menge an Flüssigkeit in den Dichtspalt gelangt und durch diesen hindurchströmt. Auf diese Weise wird ein Verschleiß der den Dichtspalt begrenzenden Oberflächen 20, 30 verhindert. Austretende geringe Leckagemengen der Flüssigkeit gelangen nach ihrem Durchtritt durch den Dichtspalt in einen Drainagespalt 7, durch den die Leckageflüssigkeit drucklos nach außen abgeführt wird, ohne daß sie in andere Teile der zugehörigen Vorrichtung, insbesondere in Lager oder Antriebsteile, gelangen kann.

Die Dichthülse 3 ist innerhalb einer konzentrischen Führungshülse 6 gelagert und geführt, wobei die Dichthülse 3 parallel zur Drehachse 14 axial verschieblich ist. In Figur 1 ist die Dichthülse 3 in ihrer ersten Verschiebungsendstellung gezeigt, in der sie soweit wie möglich in die Lagerhülse 2 hineingeschoben ist. In dieser Stellung ist der Flüssigkeitskanal 10 für den Durchfluß der Flüssigkeit frei und es ist eine Abdichtung zwischen dem stillstehenden Teil 12 und dem rotierenden Teil 13 der zugehörigen Vorrichtung über die Spaltdichtung zwischen Lagerhülse 2 und Dichthülse 3 gewährleistet.

Die Führungshülse 6 ist ihrerseits mit radialem Bewegungsspiel dichtend in den stillstehenden Vorrichtungsteil 12 eingebaut, wobei zur Abdichtung ein Dichtring 63 dient. Mittels eines Halterings 64 ist ein Lagerflansch 62 der Führungshülse 6 in Axialrichtung festgelegt, wobei aber das radiale Bewegungsspiel erhalten bleibt, um Fluchtungsfehler zwischen dem stillstehenden Vorrichtungsteil 12 und dem rotierenden Vorrichtungsteil 13, also hier zwischen der Dichthülse 3 und der Lagerhülse 2, ausgleichen zu können.

Die Dichthülse 3 besitzt an ihrem in der Zeichnung rechten Ende, also an ihrer Zuströmseite, einen größeren Durchmesser und dadurch auch eine größere Stirnfläche 34, die durch einen im Durchmesser vergrößerten Kragen 32 gebildet ist. In den Kragen 32 ist außen ein Dichtring 33 eingesetzt, der die Dichthülse 3 gegen den Innenumfang der Führungshülse 6 abdichtet.

In dem in Figur 1 gezeigten Zustand der Einrichtung 1, bei dem Flüssigkeit durch den Flüssigkeitskanal 10 strömt, ist die Dichthülse 3 durch den Druck und/oder die Strömung der Flüssigkeit in die in Figur 1 gezeichnete linke Verschiebungsendstellung gedrückt, wobei diese Stellung allein durch die strömende Flüssigkeit und deren Druck bewirkt wird. Da die Stirnfläche 34 eine größere Oberfläche hat als die auf der anderen Seite in der Lagerhülse 2 liegende Stirnfläche 35 der Dichthülse 3, ergibt sich hier eine Kraftdifferenz, die zu der dargestellten Verschiebung führt.

Zwischen der Dichthülse 3 und der Führungshülse 6 ist weiterhin eine Druckfeder 5, hier eine Schraubenfeder, angeordnet, die die Dichthülse 3 mit einer Vorbelastungskraft im Sinne einer Verschiebung nach rechts, also entgegen der Wirkung der Flüssigkeit, beaufschlagt. Die Federkraft ist dabei so gewählt, daß sie kleiner ist als die von der Flüssigkeit verursachte, auf die Dichthülse 3 ausgeübte Kraft.

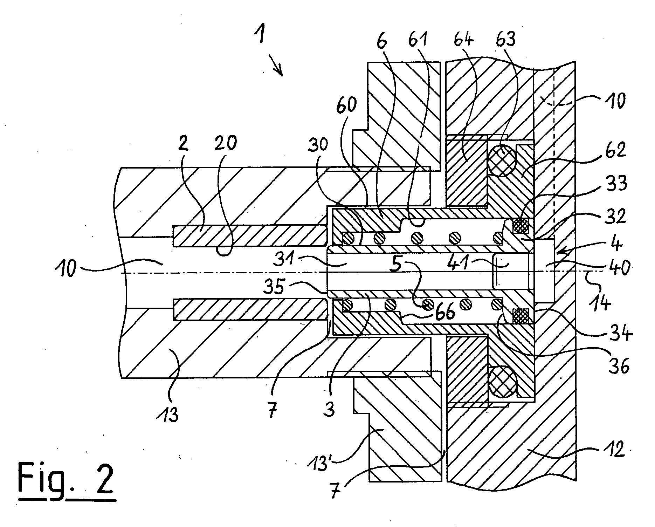

Figur 2 der Zeichnung zeigt die Einrichtung 1 in einem Funktionszustand, bei dem keine Flüssigkeit durch den Flüssigkeitskanal 10 strömt. Damit herrscht im Flüssigkeitskanal 10 kein höherer Druck mehr; vielmehr ist jetzt der Flüssigkeitskanal 10 drucklos. Dieser fehlende Flüssigkeitsdruck und/oder die fehlende Flüssigkeitsströmung sorgen dafür, daß die Dichthülse 3 nun unter der Wirkung der von der Druckfeder 5 ausgeübten Vorbelastungskraft in ihre zweite Verschiebungsendstellung gelangt, wie sie in Figur 2 gezeichnet ist. In dieser zweiten Verschiebungsendstellung ist die Dichthülse 3 aus der Lagerhülse 2 vollständig herausgezogen und somit von dieser entfernt und getrennt. Gleichzeitig liegt nun die Dichthülse 3 mit ihrem rechten Endbereich, an dem der Kragen 32 vorliegt, auf einem Steuerzapfen 4. Der Steuerzapfen 4 ist konzentrisch zur Drehachse 14 im stillstehenden Vorrichtungsteil 12 angebracht und darin mittels eines Kopfes 40 fixiert. In das hohle Innere der Führungshülse 6 ragt ebenfalls konzentrisch zur Drehachse 14 ein Zapfenteil 41, dessen Außendurchmesser so bemaßt ist, daß er in das hohle Innere 31 der Dichthülse 3 paßt und das hohle Innere 31 der Dichthülse 3 im in Figur 2 gezeigten Zustand verschließt. Gleichzeitig liegt die Stirnfläche 34 der Dichthülse 3 an einer ihr zugewandten inneren Stirnfläche des stillstehenden Vorrichtungsteils 12 an, wodurch der Flüssigkeitskanal 10 dicht verschlossen wird. Die Dichthülse 3 hat hier also auch zusätzlich die Funktion eines Rückschlagventils zur Vermeidung eines Nachfließens von Flüssigkeit aus dem oberen Bereich des Flüssigkeitskanals 10.

Wenn nun der rotierende Vorrichtungsteil 13 relativ zum stillstehenden Vorrichtungsteil 12 rotiert, tritt keinerlei Reibung zwischen der Lagerhülse 2 und der Dichthülse 3 auf, da diese beiden Teile nun voneinander entfernt sind. Damit kann es auch bei einem Trockenlauf, also bei fehlender Flüssigkeitsströmung, nicht zu einer erhöhten Reibung mit der Entstehung von übermäßiger Wärme rund damit einhergehendem Verschleiß im Bereich der Lagerhülse 2 und der Dichthülse 3 kommen.

Sobald im oberen Teil des Flüssigkeitskanals 10 wieder ein Flüssigkeitsdruck aufgebaut wird, wird die Dichthülse 3 infolge des Flüssigkeitsdrucks, der auf die Stirnfläche 34 am Kragen 32 der Dichthülse 3 wirkt, gegen die Kraft der Feder 5 nach links verschoben, so daß sie dann umgehend wieder in Eingriff mit der Lagerhülse 2 tritt und nun wieder die Spaltdichtung bildet. Zugleich kommt die Dichthülse nach ihrem etwa halben Verschiebungsweg vom Steuerzapfen 4 frei. Der Flüssigkeitskanal 10 ist nun also wieder geöffnet.

Es wird somit ohne äußere Betätigungsmittel und ohne manuelle Eingriffe ein automatisches Umschalten der Einrichtung zwischen zwei verschiedenen Zuständen erreicht. In dem einen Zustand wird eine Drehdichtung in Form einer Spaltdichtung hergestellt, die die unter Druck durchströmende Flüssigkeit nach außen hin nicht austreten läßt. In dem zweiten Zustand sind die Teile, die die Spaltdichtung bilden, außer Eingriff gebracht, so daß dann bei Rotation des rotierenden Vorrichtungsteils 13 keine Trockenlauf-Reibung auftritt, die zu Schäden führen könnte.

## Patentansprüche

1. Einrichtung (1) für die Überleitung einer in wenigstens einem Flüssigkeitskanal (10) geführten Flüssigkeit aus einem stillstehenden Vorrichtungsteil (12) in einen rotierenden Vorrichtungsteil (13) oder umgekehrt, wobei die Vorrichtungsteile (12, 13) mindestens zwei konzentrisch zu einer Drehachse (14) des rotierenden Vorrichtungsteils (13) angeordnete und ineinandergreifende Elemente umfassen, die einen Abschnitt des Flüssigkeitskanals (10) bilden und miteinander eine Spaltdichtung bilden,
**dadurch gekennzeichnet,**
**daß** das eine Element eine fest an dem einen Vorrichtungsteil (13) angeordnete Lagerhülse (2) ist und daß das andere Element eine Dichthülse (3) ist, die in ihrer Axialrichtung parallel zur Drehachse (14) verschieblich und dichtend in oder an dem anderen Vorrichtungsteil (12) gehaltert und geführt ist, wobei die Dichthülse (3) in einer ersten Verschiebungsendstellung konzentrisch in der Lagerhülse (2) oder um diese herum liegt und mit dieser die Spaltdichtung bildet und wobei die Dichthülse (3) in einer zweiten Verschiebungsendstellung von der Lagerhülse (2) entfernt und getrennt ist.

2. Einrichtung nach Anspruch 1, **dadurch gekennzeichnet, daß** die Dichthülse (3) durch den Druck und/oder die Strömung der Flüssigkeit in ihre erste Verschiebungsendstellung bringbar und in dieser haltbar ist.

3. Einrichtung nach Anspruch 1 oder 2, **dadurch gekennzeichnet, daß** die Dichthülse (3) mit einer dem Druck und/oder der Strömung der Flüssigkeit entgegengerichteten Vorbelastungskraft beaufschlagt ist, durch welche die Dichthülse (3) bei fehlendem Druck und/oder fehlender Strömung der Flüssigkeit in ihre zweite Verschiebungsendstellung bringbar und in dieser haltbar ist.

4. Einrichtung nach einem der vorhergehenden Ansprüche, **dadurch gekennzeichnet, daß** die Dichthülse (3) auf ihrer der zuströmenden Flüssigkeit zugewandten Stirnseite (34) eine größere Stirnfläche aufweist als auf ihrer der abströmenden Flüssigkeit zugewandten Stirnseite (35).

5. Einrichtung nach einem der vorhergehenden Ansprüche, **dadurch gekennzeichnet, daß** die Dichthülse (3) in ihrer zweiten Verschiebungsendstellung den Flüssigkeitskanal (10) absperrt.

6. Einrichtung nach Anspruch 5, **dadurch gekennzeichnet, daß** an dem die Dichthülse (3) aufweisenden Vorrichtungsteil (12) ein Steuerzapfen (4) konzentrisch zur Dichthülse (3) angeordnet ist, der in der zweiten Verschiebungsendstellung der Dichthülse (3) dichtend mit dieser in Eingriff steht, wobei die axiale Länge des Steuerzapfens (4) maximal etwa 50% des axialen Verschiebungsweges der Dichthülse (3) beträgt.

7. Einrichtung nach einem der vorhergehenden Ansprüche, **dadurch gekennzeichnet, daß** die Dichthülse (3) in oder auf einer Führungshülse (6) geführt ist und daß die Führungshülse (6) mit radialem Bewegungsspiel dichtend in dem zugehörigen Vorrichtungsteil (12) gelagert ist.

8. Einrichtung nach Anspruch 7, **dadurch gekennzeichnet, daß** die Dichthülse (3) und die Führungshülse (6) mit in der ersten Verschiebungsendstellung der Dichthülse (3) aneinander anliegenden, ein Pendellager bildenden kalottenförmigen Anschlagflächen (36, 66) ausgebildet sind.

9. Einrichtung nach einem der Ansprüche 3 bis 8, **dadurch gekennzeichnet, daß** zur Erzeugung der Vorbelastungskraft eine Druckfeder (5) zwischen der Dichthülse (3) einerseits und dem zugehörigen Vorrichtungsteil (12) oder der Führungshülse (6) andererseits angeordnet ist.

10. Einrichtung nach einem der vorhergehenden Ansprüche, **dadurch gekennzeichnet, daß** von der Spaltdichtung ausgehend zwischen den beiden Vorrichtungsteilen (12, 13) ein drucklos nach außen führender Drainagespalt oder -kanal (7) für die Ableitung von durch die Spaltdichtung hindurchtretender Leckageflüssigkeit vorgesehen ist.

11. Einrichtung nach einem der vorhergehenden Ansprüche, **dadurch gekennzeichnet, daß** der rotierende Vorrichtungsteil (13) eine Werkzeugspindel einer Werkzeugmaschine ist, daß der stillstehende Vorrichtungsteil (12) ein Teil des Gehäuses der Werkzeugmaschine ist und daß die Flüssigkeit eine Kühl- und Schmierflüssigkeit für ein an der Werkzeugspindel gehaltertes Werkzeug ist.

12. Einrichtung nach Anspruch 11, **dadurch gekennzeichnet, daß** die Einrichtung (1) am werkzeugfernen Ende der Werkzeugspindel angeordnet ist.

13. Einrichtung nach Anspruch 11, **dadurch gekennzeichnet, daß** die Einrichtung (1) im Verlauf der Werkzeugspindel zwischen zwei diese lagernden Lagereinheiten angeordnet ist.
